# EUROPEAN PATENT APPLICATION

(11) **EP 2 648 148 A2**
(43) Date of publication of application: **09.10.2013**
(21) Application number: 13161853.0
(22) Date of filing: 29.03.2013
(51) Int. Cl.: G06Q 20/32

(54) **Payment method through a payment instrument and server and mobile terminal performing the same**

(30) Priority: 05.04.2012 KR 20120035753
(71) Applicant: LG CNS Co., Ltd., Seoul 100-052 (KR)
(72) Inventor: Kang, Min, SEOUL 100-725 (KR)
(74) Representative: Delorme, Nicolas

(57) **Abstract**

A payment method is performed through a payment server connectable to at least one mobile terminal and a payment terminal. The payment method includes: receiving payment information including a payment identification code and a payment location code from the payment terminal; estimating a payment location based on the payment location code; determining the at least one mobile terminal associated with the payment identification code; transmitting the estimated payment location to the at least one mobile terminal; and receiving a location-based approval or a payment rejection from a particular mobile terminal, the approval/rejection determined based on the estimated payment location and a location of a particular mobile terminal belonging to the at least one mobile terminal.

## Description

### CROSS-REFERENCE TO RELATED APPLICATION

This application claims priority under 35 U.S.C. §119 to Korean Patent Application No. 10-2012-0035753, filed on April 5th, 2012, in the Korean Intellectual Property Office, the contents of which is incorporated herein by reference.

### BACKGROUND OF THE INVENTION

### Field of the Invention

The present invention relates to a payment technique through a payment instrument and, more particularly, to a payment method through a simple payment instrument with strengthened security, a payment server, and a mobile terminal performing the same.

### Related Art

A payment instrument (e.g., credit card, checking card, etc.) taking the place of cash, provides user convenience but involves monetary damage due to a burglary, loss, or the like. For example, if a credit card of a user is lost or stolen, after a finder or purloiner of the credit card uses the credit card, the user may be post-notified through an SMS, or the like, to prevent payment thereof, and in this case, relevant monetary damage may be settled through dispute conciliation. Patent documents below provide various techniques for preventing such damage.

Korean Patent Laid Open Publication No. 10-2011-0125523 relates to a technique of preventing an unauthorized use of a credit card by combining a portion of numbers given to a credit card and a one-time number assigned each time a credit card is used.

Korean Patent Laid Open Publication No. 10-2011-0019887 relates to a system for strengthening security of card transactions by allowing a user and a banking institution to authenticate one another.

These related art documents resolve security concerns of credit card payment by providing a one-time number or providing a scheme of mutual authentication between a user and a banking institution, but such solutions have limitation in fundamentally preventing an unauthorized use of credit cards.

### Summary of the Invention

It is, therefore, an object of the present invention to provide a payment method for strengthening security simply in a situation in which a payment instrument is lost or stolen, to prevent the payment instrument from being misused (i.e., from being used without authorization), and a payment server and a mobile terminal performing the same.

It is another object of the present invention to provide a payment method for providing a distance difference between a payment location and a holder of a payment instrument, as a security factor, to prevent the payment instrument from being misused, and a payment server and a mobile terminal performing the same.

To achieve the above objects, there is provided, in a first embodiment, a payment method through a payment instrument performed by a payment server connectable to at least one mobile terminal and a payment terminal, the payment method comprising: receiving payment information including a payment identification code and a payment location code from the payment terminal; estimating a payment location based on the payment location code; identifying the at least one mobile terminal associated with the payment identification code; transmitting the estimated payment location to the at least one mobile terminal; and receiving a location-based payment approval or rejection from a particular mobile terminal of the at least one mobile terminal, the payment decision based on the estimated payment location and a location of the particular mobile terminal.

In another embodiment, provided is a payment method performed by a mobile terminal connectable to a payment server, the payment method comprising: receiving a payment location and a payment approval request from the payment server; estimating a location of the mobile terminal; and approving or rejecting the payment approval request based on location information regarding the payment location and the estimated location of the mobile terminal.

In another embodiment, provided is payment server connectable to at least one mobile terminal and a payment terminal, the payment server comprising: a payment information receiving unit configured to receive payment information including a payment identification code and a payment location code from the payment terminal; a payment location estimating unit configured to estimate a payment location based on the payment location code; a payment information transmitting unit configured to: identify the at least one mobile terminal associated with the payment identification code; and transmit the estimated payment location to the at least one mobile terminal; and a payment permission receiving unit configured to receive a location-based payment approval or payment rejection from a particular mobile terminal of the at least one mobile terminal, the location-based payment approval or payment rejection determined based on the estimated payment location and a location of the particular mobile terminal.

In another embodiment, provided is mobile terminal connectable to a payment server, the mobile terminal comprising: a payment approval request receiving unit configured to receive a payment location and a payment approval request from the payment server; a location estimating unit configured to estimate a location of the mobile terminal; and a payment approving unit configured to approve or reject the payment approval request based on location information regarding the payment location and the estimated location of the mobile terminal.

### Brief Description of the Drawings

The above and other objects and features of the present invention will become apparent from the following description of preferred embodiments given in conjunction with the accompanying drawings, in which:
FIG. 1 is a view illustrating a payment system according to an embodiment of the present invention;
FIG. 2 is a block diagram of a payment server of FIG. 1 according to an illustrative embodiment;
FIG. 3 is a block diagram of a mobile terminal of FIG. 1 according to an illustrative embodiment;
FIG. 4 is a flow chart illustrating a payment process performed by the payment server according to an illustrative embodiment;
FIG. 5 is a flow chart illustrating a process performed by a mobile terminal according to an illustrative embodiment;
FIG. 6 is a flow chart illustrating a process performed by a payment system according to an illustrative embodiment;
FIG. 7 is a view illustrating a mobile terminal displaying a map in which a payment location and a location of the mobile terminal are indicated according to an illustrative embodiment; and
FIG. 8 is a view illustrating a mobile terminal displaying a request for payment approval through a pop-up window overlaid on a map according to an illustrative embodiment.

The drawings are not necessarily to scale. The drawings are merely representations, not intended to portray specific parameters of the invention. The drawings are intended to depict only typical embodiments of the invention, and therefore should not be considered as limiting in scope. In the drawings, like numbering represents like elements.

### Detailed Description of the Embodiments

Explanation of the present invention refers to exemplary embodiments for structural or functional explanation purposes only, and, as such, the scope of the present invention should not be construed to be limited to the embodiments explained herein. That is, since the embodiments may be implemented in several forms without departing from the characteristics thereof, it should also be understood that the herein-described embodiments are not limited by any of the details of the foregoing description, unless otherwise specified, but rather should be construed broadly within its scope as defined in the appended claims. Therefore, various changes and modifications that fall within the scope of the claims, or equivalents of such scope are therefore intended to be embraced by the appended claims.

Terms described in the present disclosure may be understood as follows.

While terms such as "first" and "second," etc., may be used to describe various components, such components must not be understood as being limited to the above terms. The above terms are used only to distinguish one component from another. For example, a first component may be referred to as a second component without departing from the scope of rights of the present invention, and likewise a second component may be referred to as a first component.

It will be understood that when an element is referred to as being "connected to" another element, it can be directly connected to the other element or intervening elements may also be present. In contrast, when an element is referred to as being "directly connected to" another element, no intervening elements are present. In addition, unless explicitly described to the contrary, the word "comprise" and variations such as "comprises" or "comprising," will be understood to imply the inclusion of stated elements but not the exclusion of any other elements. Meanwhile, other expressions describing relationships between components such as "∼ between", "immediately ∼ between" or "adjacent to ∼" and "directly adjacent to ∼" may be construed similarly.

Singular forms "a", "an" and "the" in the present disclosure are intended to include the plural forms as well, unless the context clearly indicates otherwise. It will be further understood that terms such as "including" or "having," etc., are intended to indicate the existence of the features, numbers, operations, actions, components, parts, or combinations thereof disclosed in the specification, and are not intended to preclude the possibility that one or more other features, numbers, operations, actions, components, parts, or combinations thereof may exist or may be added.

Identification letters (e.g., a, b, c, etc.) in respective steps are used for the sake of explanation and do not described order of respective steps. The respective steps may be changed from a mentioned order unless specifically mentioned in context. Namely, respective steps may be performed in the same order as described, may be substantially simultaneously performed, or may be performed in reverse order.

In describing the elements of the present invention, terms such as first, second, A, B, (a), (b), etc., may be used. Such terms are used for merely discriminating the corresponding elements from other elements and the corresponding elements are not limited in their essence, sequence, or precedence by the terms.

In the embodiments of the present invention, the foregoing method may be implemented as codes that can be read by a processor in a program-recorded medium. The processor-readable medium may include any types of recording devices in which data that can be read by a computer system is stored. The processor-readable medium may include a ROM, a RAM, a CD-ROM, a magnetic tape, a floppy disk, an optical data storage device, and the like. The processor-readable medium also includes implementations in the form of carrier waves or signals (e.g., transmission via the Internet). The computer-readable recording medium may be distributed over network-coupled computer systems so that the computer-readable code may be stored and executed in a distributed fashion.

In the foregoing exemplary system, the methods are described based on the flow chart as sequential steps or blocks, but the present invention is not limited to the order of the steps and some of them may be performed in order different from the order of the foregoing steps or simultaneously. Also, a skilled person in the art will understand that the steps are not exclusive but may include other steps, or one or more steps of the flow chart may be deleted without affecting the scope of the present invention.

The terms used in the present application are merely used to describe particular embodiments, and are not intended to limit the present invention. Unless otherwise defined, all terms used herein, including technical or scientific terms, have the same meanings as those generally understood by those with ordinary knowledge in the field of art to which the present invention belongs. Such terms as those defined in a generally used dictionary are to be interpreted to have the meanings equal to the contextual meanings in the relevant field of art, and are not to be interpreted to have ideal or excessively formal meanings unless clearly defined in the present application.

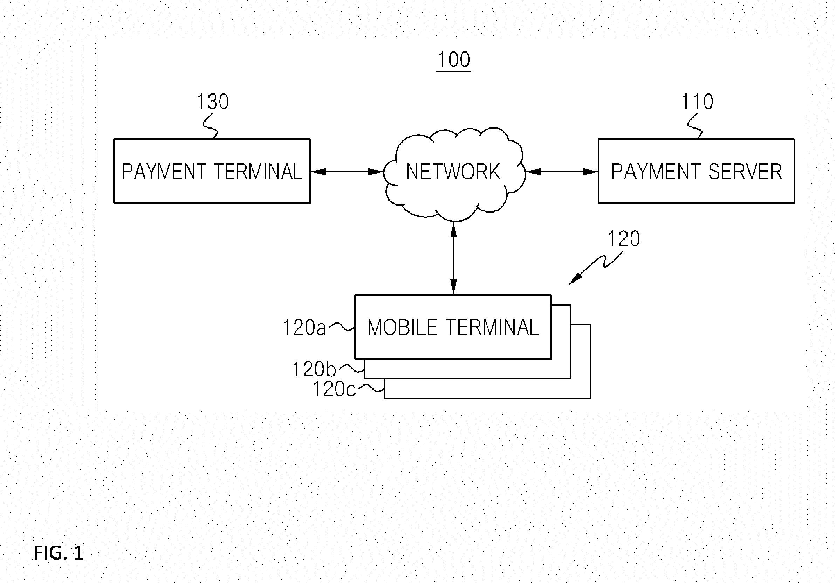

FIG. 1 is a view illustrating a payment system according to an embodiment of the present invention.

Referring to FIG. 1, a payment system 100 may include a payment server 110, a mobile terminal 120, and a payment terminal 130.

The payment server 110, a computing device performing payment, may be managed by, for example, a bank, a credit card company, or a telephone service enterprise. When a payment instrument is used through the Internet, an affiliate, a cash machine (i.e., an automated teller machine (ATM)), or a telephone, the payment server 110 may receive payment information. The payment instrument may be a credit card, a check card, or a smart card. The payment information may include the details of payment including a payment date, payment charge, a payment identification code, and a payment location code. For example, the payment identification code may be a unique number of a credit card, a check card, or a smart card, and the payment location code may be an affiliate code, a cash machine code, a network address, or a phone number.

The mobile terminal 120, a computing device carried around by a payment instrument owner, may include, for example, a user terminal such as a smartphone, a tablet personal computer (PC) whose location may be estimated. When a payment is made through a payment instrument, the mobile terminal 120 may receive a payment location and may approve or reject payment based on the payment location.

The payment terminal 130 is a user terminal for payment, and a location of the payment terminal 130 may be estimated by the payment server 110. In one embodiment, in case of an Internet payment, the payment terminal 130 may be a computing device such as smartphone, a tablet PC, a desktop computer, a notebook computer, etc., and a location thereof may be estimated through a network address. In a different embodiment, in case of a telephone payment, the payment terminal 130 may be a telephone service terminal such as a household corded/cordless telephone, or an Internet phone, and a location thereof may be estimated by a phone number or a network address. Such an estimation may be performed in corporation with an external telephone service enterprise (or an external telephone service provider). In another embodiment, in case of payment of an affiliate, the payment terminal 130 may be a payment device for a credit card, a check card, or a smart card, and a location thereof may be estimated based on an affiliate code (i.e., an affiliate identifier). In another embodiment, in case of cash withdrawal, the payment terminal 130 may a cash machine (i.e., an ATM), and a location thereof may be estimated based on a cash machine code).

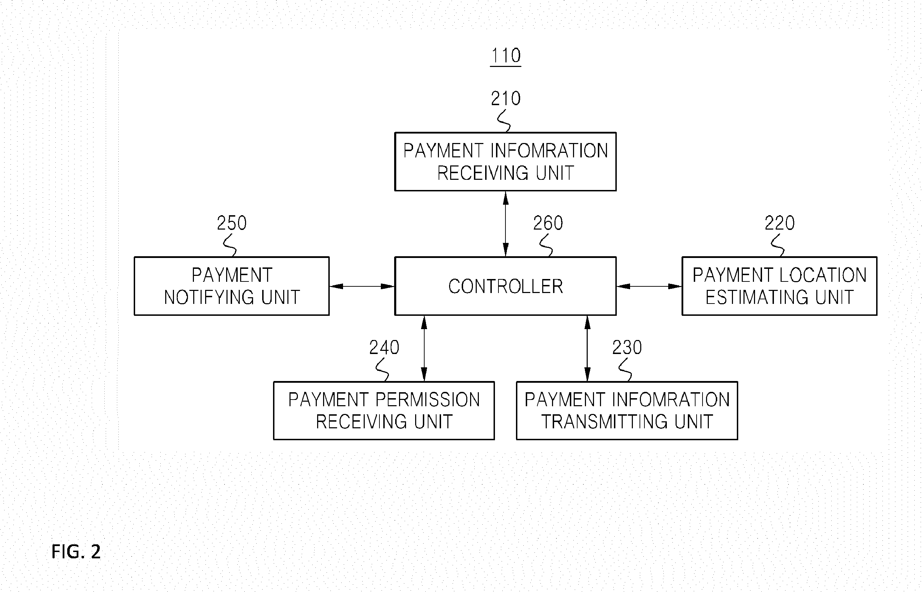

FIG. 2 is a block diagram of a payment server of FIG. 1.

Referring to FIG. 2, the payment server 110 may include a payment information receiving unit 210, a payment location estimating unit 220, a payment information transmitting unit 230, a payment permission receiving unit 240, a payment notifying unit 250, and a controller 260.

The payment information receiving unit 210 may receive payment information including a payment identification code and a payment location code from the payment terminal 130.

The payment location estimating unit 220 may estimate a payment location of a credit card based on the payment location code. In one embodiment, the payment location estimating unit 220 may convert the payment location of the credit card into location information already used in the mobile terminal 120. For example, the location information may include location data converted by a global positioning system (GPS), a WiFi-based positioning system (WPS), or a cellular-based positioning system (CPS). As a result, the payment location estimating unit 220 may convert the payment location code into location information already used in the mobile terminal 120.

Hereinafter, a process for generating location information based on the payment location code by the payment location estimating unit 220 when the payment location code corresponds to an affiliate code, an ATM code, a network address, or a phone number, will be described in greater detail.

In a first embodiment, the payment location code corresponds to a network address. In this case, the payment location estimating unit 220 may receive a network address as a payment location code and obtain payment location data (e.g., an address of an administrative district) corresponding to the network address. During this process, the payment location estimating unit 220 may retrieve the payment location data from an external network enterprise (or an external network provider). The payment location estimating unit 220 may convert the payment into location data (e.g., a latitude and a longitude) by using a GPS, a WPS, and a CPS.

In another embodiment, the payment location code corresponds to a phone number. In this case, the payment location estimating unit 220 may receive a phone number as a payment location code and obtain payment location data (e.g., an address of an administrative district) corresponding to a phone number. During this process, the payment location estimating unit 220 may retrieve the payment data from an external telephone service enterprise. The payment location estimating unit 220 may convert the payment location data (e.g., a latitude and a longitude) into location data by using a GPS, a WPS, and a CPS.

In yet another embodiment, the payment location code corresponds to an affiliate code or an ATM code. In this case, the payment location estimating unit 220 may receive an affiliate code (or an ATM code) as a payment location code, and obtain payment location data (e.g., an address of an administrative district) corresponding to the affiliate code (or the ATM code). During this process, the payment location estimating unit 220 may retrieve the payment location data from an external card enterprise (or an external card provider). The payment location estimating unit 220 may convert the payment location data (e.g., a latitude and a longitude) into location data by using a GPS, a WPS, and a CPS.

The payment information transmitting unit 230 may determine at least one mobile terminal 120 associated with the payment identification code. Here, a correspondence relationship between the payment identification code and the at least one mobile terminal 120 may correspond to 1:n (n is a natural number). In an embodiment, the payment information transmitting unit 230 may interwork with a database (not shown) defining a relationship between the payment identification code and the corresponding mobile terminal, and when the payment identification code is received, the payment information transmitting unit 230 may search the database for the corresponding mobile terminal. Here, the at least one mobile terminal 120 may include a smartphone or a tablet PC owned by a credit card holder, or may further include a mobile terminal of a different user the credit card holder has registered previously.

The payment information transmitting unit 230 may transmit the payment location estimated by the payment location estimating unit 220 and a payment approval request to the at least one mobile terminal 120. In an embodiment, the payment location of the credit card may be location information converted by the payment location estimating unit 220. The location information may include location data converted by a GPS, a WPS, and a CPS.

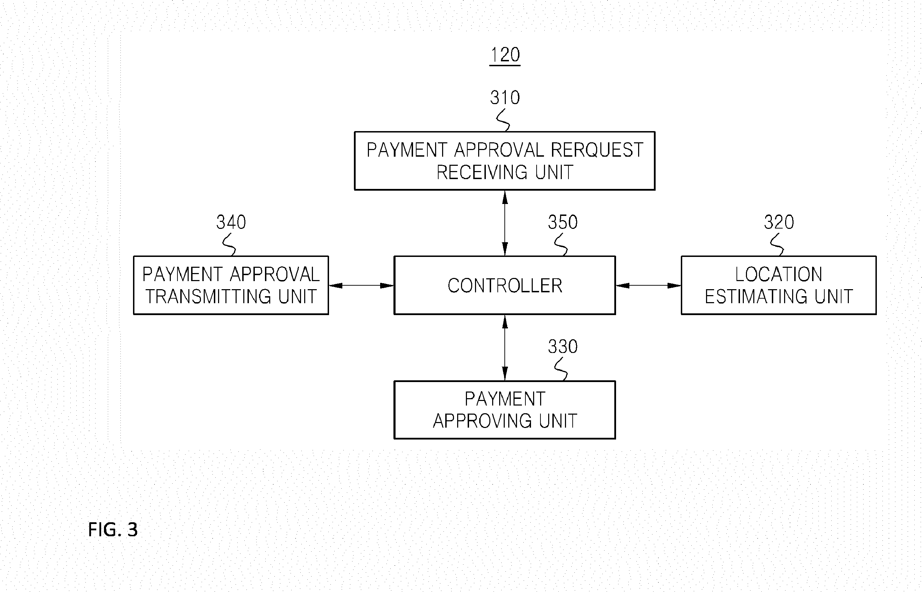

The payment permission receiving unit 240 may receive a location-based payment approval or payment rejection from a particular mobile terminal 120a belonging to the at least one mobile terminal(s) 120. The location-based payment approval or rejection may be determined based on the payment location of the credit card and the location of the particular mobile terminal 120a. Such a determination will be described in detail with reference to FIG. 3. In an embodiment, when the location-based payment approval is received from the particular mobile terminal 120a, the payment permission receiving unit 240 may disregard a location-based payment approval or payment rejection by the other remaining mobile terminals 120b and 120c. Here, the payment server 110 may finally determine the location-based payment approval received from the particular mobile terminal 120a and perform a payment approval or payment rejection.

When the location-based payment approval or payment rejection is finally determined, the payment notifying unit 250 may notify at least some of the at least one mobile terminal 120 about content of the final determination. In an embodiment, when the payment approval is received, the at least some of the at least one mobile terminal may correspond to the particular mobile terminal (e.g., 120a) which has transmitted the payment approval, and when the payment rejection is received, the at least some of the at least one mobile terminal may correspond to all the mobile terminals 120a to 120c. In a different embodiment, at least some of the at least one mobile terminal may correspond to all the mobile terminals 120a to 120c regardless of the payment. Selection may be determined according to a user setting.

The controller 260 may control an overall operation of the payment server 110, and control a control flow or a data flow between or among the payment information receiving unit 210, the payment location estimating unit 220, a payment information transmitting unit 230, the payment permission receiving unit 240, and the payment notifying unit 250.

FIG. 3 is a block diagram of the mobile terminal 120 of FIG. 1.

Referring to FIG. 3, the mobile terminal 120 may include a payment approval request receiving unit 310, a location estimating unit 320, a payment approving unit 330, a payment approval transmitting unit 340, and a controller 350.

The payment approval request receiving unit 310 may receive a payment location of a credit card and a payment approval request from the payment information transmitting unit 230 (Fig. 2). In an embodiment, the payment approval request receiving unit 310 may receive an estimated payment location of the credit card from the payment information transmitting unit 230. Here, the payment location of the credit card may include location data converted by a GPS, a WPS, or a CPS.

The location estimating unit 320 may estimate a location of the mobile terminal 120. Here, the location estimating unit 320 may determine a location of the mobile terminal 120 based on at least one of a GPS scheme, a WPS scheme, and a CPS scheme. In an embodiment, in the case of the GPS scheme, the location estimating unit 320 may determine a location of the mobile terminal 120 upon receiving GPS signals from a plurality of satellites. In a different embodiment, in the case of the WPS scheme, the location estimating unit 320 may determine a location of the mobile terminal 120 by using information regarding a wireless access point (AP) transferred through Wi-Fi. In a different embodiment, in the case of the CPS scheme, the location estimating unit 320 may determine a location of the mobile terminal 120 upon receiving a signal from the mobile terminal 120 transferred to a base station (BS) of a mobile carrier. In these embodiments, the location of the mobile terminal 120 may be converted into location data (e.g., a latitude and a longitude).

The payment approving unit 330 may approve or reject a payment approval request based on location information regarding the payment location of the payment instrument (e.g., a credit card) and the location of the mobile terminal 120. The payment approving unit 330 may approve or reject the payment approval request upon comparing the location of the mobile terminal 120 estimated by the location estimating unit 320 and the payment location of the payment instrument (e.g., a credit card).

Hereinafter, a process of comparing locations by the payment approving unit 330 will be described.

The payment approving unit 330 may determine whether the payment location of the payment instrument (e.g., a credit card) and the location of the mobile terminal 120 fall within a particular error range. The error range may be a physical, geographic distance difference between the payment location of the payment instrument (e.g., a credit card) and the location of the mobile terminal 120. For example, the error range may correspond to the shortest linear distance difference between the payment location of the credit card and the location of the mobile terminal 120. In an embodiment, the particular error range may be set by the mobile terminal 120, and may correspond to an error range estimated by a GPS, a WPS, or a CPS. In a different embodiment, the particular error range may be set by a user (e.g., a credit card holder), and such a set value may be greater than an error range estimated by a GPS, a WPS, or a CPS. Meanwhile, the error range may include a particular unit of an administrative district corresponding to an estimated payment location. For example, when an estimated payment location is in Bangbae-dong, the error range may include Bangbae-dong.

When the payment location of the payment instrument (e.g., a credit card) and the location of the mobile terminal 120 fall within the particular error range, the payment approving unit 330 may approve the payment approval request. Such an approval determination may be automatically performed by the mobile terminal 120 or may be performed under a user approval. For example, when a distance difference between the payment location of the payment instrument (e.g., a credit card) and the mobile terminal 120 falls within a particular range, the payment approving unit 330 may approve the payment approval request.

When the payment location of the payment instrument (e.g., a credit card) and the location of the mobile terminal 120 do not fall within the particular error range, the payment approving unit 330 may automatically reject the payment approval request in the mobile terminal 120. For example, when a payment location of a credit card and the location of the mobile terminal 120 exceed the particular error range, the mobile terminal 120 may automatically reject the payment approval request. Such a rejection is to prevent a loss made after the credit card is stolen or lost.

When the payment approval request is automatically rejected by the payment approving unit 330 of the mobile terminal 120 because the payment location of the payment instrument (e.g., a credit card) and the location of the mobile terminal 120 do not fall within the particular error range, the payment permission receiving unit 240 of the payment server 110 (Fig. 2) may request a payment approval from a user associated with the credit card. Namely, although the payment location of the payment instrument (e.g., a credit card) and the location of the mobile terminal 120 exceed the particular error range, the payment approving unit 330 may request a payment approval from the mobile terminal 120. This is because the cardholder may allow someone else in a remote area to use his credit card, for example.

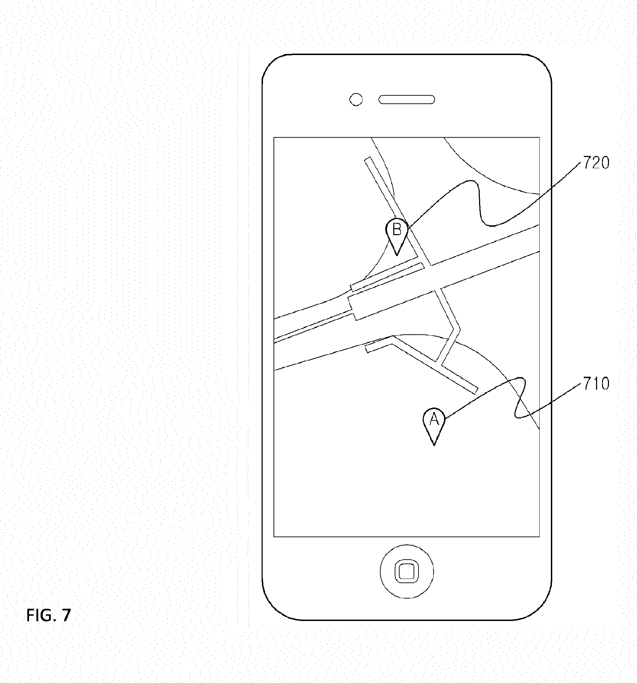

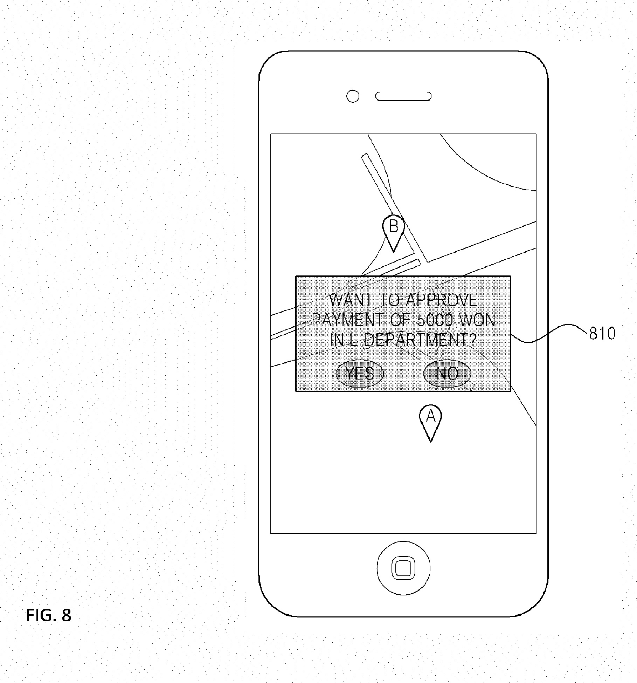

FIGS. 7 and 8 are views illustrating a mobile terminal displaying a payment location of a credit card and a location of the mobile terminal on a map.

As shown in FIG. 7, the payment approving unit 330 (Fig. 3) may display a payment location 710 of a credit card and a location 720 of the mobile terminal 120 (Fig. 3) on a map. Here, the display on the map may be performed through an application programming interface (API) provided by a map service enterprise. Specifically, the payment approving unit 330 may display the payment location of the credit card and the location of the mobile terminal 120, respectively, on the map, and determine the scale of the map based on the locations.

As shown in FIG. 8, the payment approving unit 330 (Fig. 3) may prompt a payment approval request on the map from the user of the mobile terminal 120 (Fig. 3). Specifically, the payment approving unit 330 may display the payment location of the credit card and the location of the mobile terminal 120 on the map and guide the user to approve the payment request. Such guidance may be made through a pop-up window 810 transparently overlaid on the map, and the user of the mobile terminal 120 may approve or reject the payment approval request through the pop-up window 810.

Furthermore, the payment approving unit 330 may prompt the payment approval request from the user along with a calculated distance between the payment location of the payment instrument (e.g., a credit card) and the location of the mobile terminal 120. In detail, the payment approving unit 330 may inform the user about a distance difference between the payment location of the payment instrument (e.g., a credit card) and the location of the mobile terminal 120 to guide the user about the payment approval request. Such guidance may be made through a pop-up window, and the user of the mobile terminal 120 may selectively approve or reject the payment approval request through the pop-up window.

The payment approval transmitting unit 340 (Fig. 3) may transmit the approval or rejection determined by the payment approving unit 330 to the payment permission receiving unit 240.

The controller 350 (Fig. 3) may control an overall operation of the mobile terminal 120, and the mobile terminal may control a control flow or a data flow between or among the payment approval request receiving unit 310, the location estimating unit 320, the payment approving unit 330, and the payment approval transmitting unit 340.

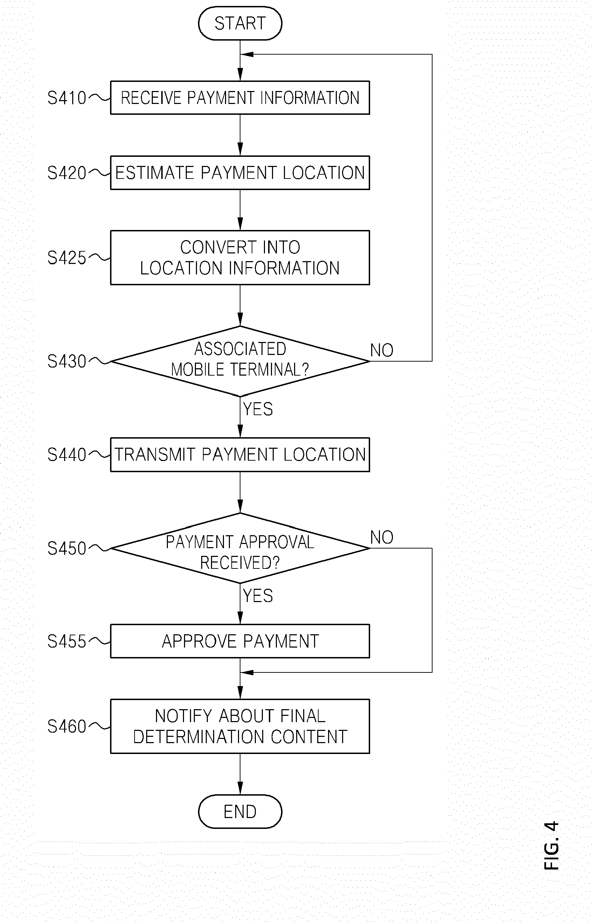

Referring back to FIG. 4, a flow chart illustrating a payment process performed by the payment server is shown. When a credit card is used (i.e., when payment is made by a credit card), the payment information receiving unit 210 receives payment information regarding a payment instrument (e.g., a credit card) from the payment terminal 130 (step S410). Here, the payment information regarding the payment instrument (e.g., a credit card) may include a payment identification code and a payment location code.

The payment location estimating unit 220 estimates a payment location of the credit card based on a payment location code (step S420). In an embodiment, the payment location of the credit card may be estimated through a network address, a phone number, an affiliate code, an ATM code, or the like. The payment location estimating unit 220 may convert the payment location into location information (e.g., a latitude and a longitude) already used in the mobile terminal 120 (step S425). Here, the location information already used by the mobile terminal 120 may include location data converted by a GPS, a WPS, or a CPS.

In steps S420 and S425, the payment location estimating unit 220 receives the payment location code and payment location data (e.g., an address of an administrative district) corresponding to a network address. During this process, the payment location estimating unit 220 may retrieve payment location data from an external network enterprise, an external telephone service enterprise, or an external card enterprise. The payment location estimating unit 220 may convert the payment location data into location data (e.g., a latitude and a longitude) by a GPS, a WPS, or a CPS.

The payment information transmitting unit 230 may determine at least one mobile terminal 120 associated with the payment identification code (step S430). In step S430, a correspondence relationship between the payment identification code and the at least one mobile terminal 120 may correspond to 1:n (n is a natural number). In an embodiment, the payment information transmitting unit 230 may interwork with a database (not shown) defining a relationship between the payment identification code and the corresponding mobile terminal, and when the payment identification code is received, the payment information transmitting unit 230 may search the database for the corresponding mobile terminal.

The payment information transmitting unit 230 transmits the estimated payment location to at least one mobile terminal 120 (step S440). In step S440, the payment information transmitting unit 230 may transmit the estimated payment location and a payment approval request to the at least one mobile terminal 120. In an embodiment, the payment location of the credit card may be location information converted by the payment location estimating unit 220. For example, the location information may include location data converted by a GPS, a WPS, and a CPS.

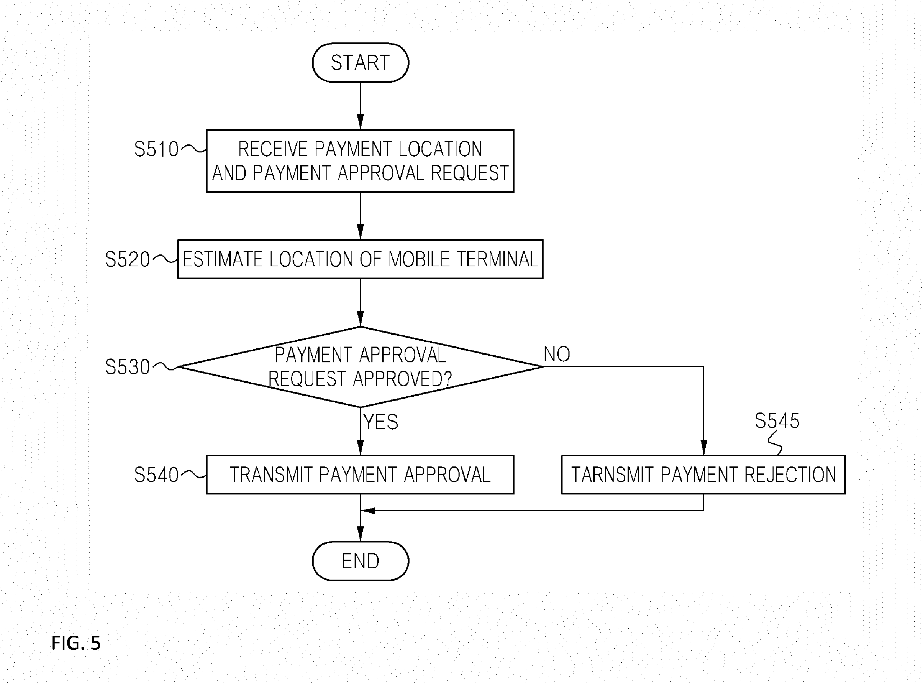

The payment permission receiving unit 240 receives a location-based payment approval or payment rejection determined based on the estimated payment location and the location of the particular mobile terminal 120a belonging to the at least one mobile terminal 120 (step S450). In step S450, the location-based payment approval or rejection may be determined based on the payment location of the payment instrument (e.g., a credit card) and the location of the particular mobile terminal 120a. Such a determination will be described in detail with reference to FIG. 5. In an embodiment, when the location-based payment approval is received from the particular mobile terminal 120a, the payment permission receiving unit 240 may disregard a location-based payment approval or payment rejection by the other remaining mobile terminals 120b and 120c (Fig. 1). When the payment approval or the payment rejection is finally determined, the payment permission receiving unit 240 may notify the at least one mobile terminals 120 about final determination content (step S460).

FIG. 5 is a flow chart illustrating a process performed by a mobile terminal.

The payment approval request receiving unit 310 receives a payment location of a credit card and a payment approval request from the payment information transmitting unit 230 (step S510). In one embodiment, the payment location of the credit card may include location data converted by a GPS, a WPS, or a CPS.

Next, the location estimating unit 320 may estimate a location of the mobile terminal 120 (step S520). In step S520, the location estimating unit 320 may determine a location of the mobile terminal 120 based on at least one of a GPS scheme, a WPS scheme, and a CPS scheme. In an embodiment, in the case of the GPS scheme, the location estimating unit 320 may determine a location of the mobile terminal 120 upon receiving GPS signals from a plurality of satellites. In a different embodiment, in the case of the WPS scheme, the location estimating unit 320 may determine a location of the mobile terminal 120 by using information regarding a wireless access point (AP) transferred through Wi-Fi. In a different embodiment, in the case of the CPS scheme, the location estimating unit 320 may determine a location of the mobile terminal 120 upon receiving a signal from the mobile terminal 120 transferred from a base station (BS) of a mobile carrier. In these embodiments, the location of the mobile terminal 120 may be converted into location data (e.g., a latitude and a longitude).

The payment approving unit 330 may approve or reject a payment approval request based on location information regarding the payment location of the payment instrument (e.g., a credit card) and the location of the mobile terminal 120 (step S530).

In step S530, the payment approving unit 330 may determine whether the payment location of the payment instrument (e.g., a credit card) and the location of the mobile terminal 120 fall within a particular error range (e.g., physical geographic distance). In an embodiment, the particular error range may be set by the mobile terminal 120, or may be set by a user (e.g., a credit card holder). The value set by the user may be greater than an error range estimated by a GPS, a WPS, or a CPS.

When the payment location of the payment instrument (e.g., a credit card) and the location of the mobile terminal 120 fall within the particular error range in step S530, the payment approving unit 330 may approve the payment approval request. Such an approval determination may be automatically performed by the mobile terminal 120 or may be performed under a user approval. For example, when a distance difference between the payment location of the payment instrument (e.g., a credit card) and the mobile terminal 120 falls within a particular range, the payment approving unit 330 may approve the payment approval request.

When the payment location of the payment instrument (e.g., a credit card) and the location of the mobile terminal 120 do not fall within the particular error range, the mobile terminal 120 may automatically reject the payment approval request. For example, when a payment location of a credit card and the location of the mobile terminal 120 exceed the particular error range, the mobile terminal 120 may automatically reject the payment approval request.

When the payment approval request is automatically rejected because the payment location of the payment instrument (e.g., a credit card) and the location of the mobile terminal 120 do not fall within the particular error range, the payment permission receiving unit 240 of the payment server 110 may request a payment approval from a user associated with the credit card. Namely, although the payment location of the payment instrument (e.g., a credit card) and the location of the mobile terminal 120 exceed the particular error range, the payment approving unit 330 may request a payment approval from the mobile terminal 120.

Furthermore, in step S530, the payment approving unit 330 may display a payment location 710 of the payment instrument (e.g., a credit card) and a location 720 of the mobile terminal 120 on a map. In an embodiment, the payment approving unit 330 may display the payment location of the payment instrument (e.g., a credit card) and the location of the mobile terminal 120, respectively, on the map, and determine the scale of the map based on the locations.

Furthermore, in step S530, the payment approving unit 330 may prompt a payment approval request on the map from the user of the mobile terminal 120. Specifically, the payment approving unit 330 may display the payment location of payment instrument (e.g., the credit card) and the location of the mobile terminal 120 on the map and guide the user to approve the payment request. In an embodiment, such guidance may be made through a pop-up window 810 transparently overlaid on the map, as shown in FIG. 8 and previously described, and the user of the mobile terminal 120 may approve or reject the payment approval request through the pop-up window 810.

Still furthermore, in step S530, the payment approving unit 330 may prompt the payment approval request from the user with the payment location of the payment instrument (e.g., a credit card) and the location of the mobile terminal 120. Specifically, the payment approving unit 330 may inform the user about a distance difference between the payment location of the payment instrument (e.g., a credit card) and the location of the mobile terminal 120 to guide the user about the payment approval request. In one embodiment, such guidance may be made through a pop-up window, and the user of the mobile terminal 120 may selectively approve or reject the payment approval request through the pop-up window.

Finally, the payment approval transmitting unit 340 transmits the approval or rejection determined by the payment approving unit 330 to the payment permission receiving unit 240 (step S540 or step S545), and the process ends.

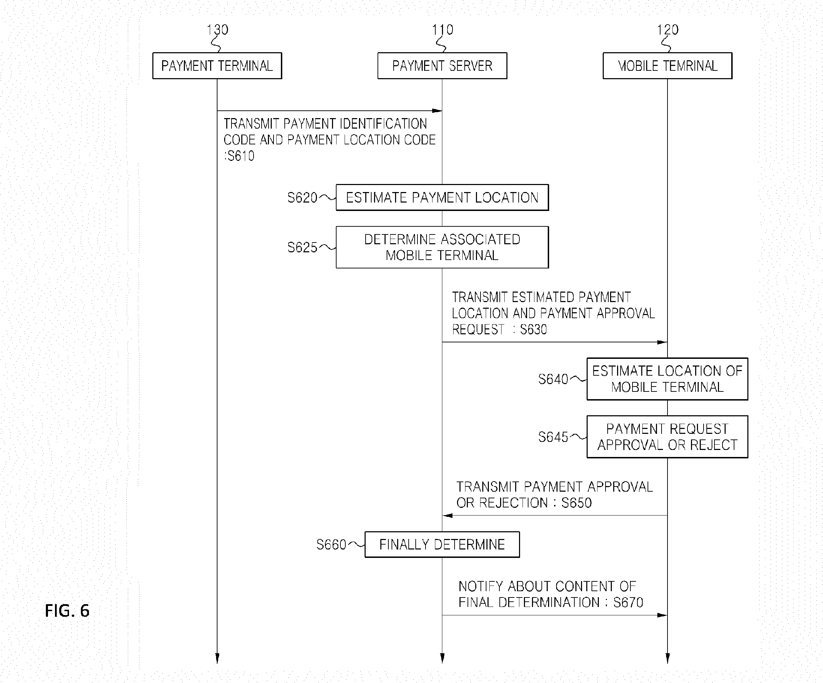

FIG. 6 is a flow chart illustrating a process performed by a payment system.

The payment terminal transmits a payment identification code and a payment location code to the payment information receiving unit 210 (step S610). The payment location estimating unit 220 estimates a payment location of a credit card based on the received payment location code (step S620). In an embodiment, the payment location estimating unit 220 may convert the payment location of the payment instrument (e.g., a credit card) into location information already used by the mobile terminal 120. Here, the location information may include location data converted by a GPS, a WPS, or a CPS.

The payment information transmitting unit 230 determines the at least one mobile terminal 120 associated with the received payment identification code (step S625). The payment information transmitting unit 230 may transmit the payment location of the payment instrument (e.g., a credit card) and a payment approval request to the payment approval request receiving unit 310 (step S630).

The location estimating unit 320 estimates a location of the mobile terminal 120 (step S640). In step S640, the location estimating unit 320 may determine a location of the mobile terminal 120 based on a GPS scheme, a WPS scheme, or a CPS scheme, and convert the location of the mobile terminal 120 into location data (e.g., a latitude or a longitude).

The payment approving unit 330 may approve or reject the payment approval request based on the payment location of the payment instrument (e.g., a credit card) and the estimated location of the mobile terminal 120 (step S645). The payment approval transmitting unit 340 transmits the approval or rejection determined by the payment approving unit 330 to the payment permission receiving unit 240 (step S650).

The payment permission receiving unit 240 may finally determine a payment approval or rejection (step S660). In an embodiment, when a payment approval is received from the particular mobile terminal 120a, the payment permission receiving unit 240 may disregard a payment approval or rejection by the other remaining mobile terminals 120b and 120c. When the location-based payment approval or rejection is finally determined, the payment notifying unit 250 may notify at least one mobile terminal 120 about content of the final determination (step S670).

As described herein, the present invention allows a payment method to be performed by a mobile terminal connectable to a payment server. It can be appreciated that the approaches disclosed herein can be used within a computer system. In this case, one or more systems for performing the processes described in the invention can be obtained and deployed to a computer infrastructure. To this extent, the deployment can comprise one or more of: (1) installing program code on a data center device, such as a computer system, from a computer-readable storage medium; (2) adding one or more data center devices to the infrastructure; and (3) incorporating and/or modifying one or more existing systems of the infrastructure to enable the infrastructure to perform the process actions of the invention.

An exemplary computer system may be described in the general context of computer-executable instructions, such as program modules, being executed by a computer. Generally, program modules include routines, programs, people, components, logic, data structures, and so on that perform particular tasks or implements particular abstract data types. The exemplary computer system may be practiced in distributed computing environments where tasks are performed by remote processing devices that are linked through a communications network. In a distributed computing environment, program modules may be located in both local and remote computer storage media including memory storage devices.

It will be appreciated that the flowcharts of FIGS. 4-6 illustrate the architecture, functionality, and operation of possible implementations of systems, methods and computer program products according to various embodiments of the present invention. In this regard, each block in the flowchart may represent a module, segment, or portion of code, which comprises one or more executable instructions for implementing the specified logical function(s). It should also be noted that, in some alternative implementations, the functions noted in the blocks might occur out of the order noted in the figures. For example, two blocks shown in succession may, in fact, be executed substantially concurrently. It will also be noted that each block of flowchart illustration can be implemented by special purpose hardware-based systems that perform the specified functions or acts, or combinations of special purpose hardware and computer instructions.

Many of the functional units described in this specification have been labeled as modules in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like. Modules may also be implemented in software for execution by various types of processors. An identified module or component of executable code may, for instance, comprise one or more physical or logical blocks of computer instructions which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Further, a module of executable code could be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, over disparate memory devices, and may exist, at least partially, merely as electronic signals on a system or network.

Furthermore, as will be described herein, modules may also be implemented as a combination of software and one or more hardware devices. For instance, a module may be embodied in the combination of a software executable code stored on a memory device. In a further example, a module may be the combination of a processor that operates on a set of operational data. Still further, a module may be implemented in the combination of an electronic signal communicated via transmission circuitry.

As noted above, some of the embodiments may be embodied in hardware. The hardware may be referenced as a hardware element. In general, a hardware element may refer to any hardware structures arranged to perform certain operations. In one embodiment, for example, the hardware elements may include any analog or digital electrical or electronic elements fabricated on a substrate. The fabrication may be performed using silicon-based integrated circuit (IC) techniques, such as complementary metal oxide semiconductor (CMOS), bipolar, and bipolar CMOS (BiCMOS) techniques, for example. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. The embodiments are not limited in this context.

Also noted above, some embodiments may be embodied in software. The software may be referenced as a software element. In general, a software element may refer to any software structures arranged to perform certain operations. In one embodiment, for example, the software elements may include program instructions and/or data adapted for execution by a hardware element, such as a processor. Program instructions may include an organized list of commands comprising words, values or symbols arranged in a predetermined syntax, that when executed, may cause a processor to perform a corresponding set of operations.

For example, an implementation of the exemplary computer system of FIG. 1 may be stored on or transmitted across some form of computer readable media. Computer readable media can be any available media that can be accessed by a computer. By way of example, and not limitation, computer readable media may comprise "computer storage media" and "communications media."

"Computer-readable storage device" includes volatile and non-volatile, removable and non-removable computer storable media implemented in any method or technology for storage of information such as computer readable instructions, data structures, program modules, or other data. Computer storage device includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

"Communication media" typically embodies computer readable instructions, data structures, program modules, or other data in a modulated data signal, such as carrier wave or other transport mechanism. Communication media also includes any information delivery media.

The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above are also included within the scope of computer readable media.

While the present invention has been shown and described in connection with the embodiments, it will be apparent to those skilled in the art that modifications and variations can be made without departing from the spirit and scope of the invention. Thus, the present invention is not limited to the foregoing embodiments and may include all the embodiments within the scope of the appended claims.

## Claims

1. A payment method through a payment instrument performed by a payment server connectable to at least one mobile terminal and a payment terminal, the payment method comprising:
receiving payment information including a payment identification code and a payment location code from the payment terminal;
estimating a payment location based on the payment location code;
identifying the at least one mobile terminal associated with the payment identification code;
transmitting the estimated payment location to the at least one mobile terminal; and
receiving a location-based payment approval or rejection from a particular mobile terminal of the at least one mobile terminal, the payment decision based on the estimated payment location and a location of the particular mobile terminal.

2. The payment method of claim 1, wherein the receiving of the location-based payment approval or rejection comprises:
when the estimated payment location and the location of the particular mobile terminal fall within a particular error range, receiving the location-based payment approval automatically determined by one of: the mobile terminal, and a user approval; and
when the estimated payment location and the location of the particular mobile terminal do not fall within the particular error range, receiving the location-based payment rejection automatically determined by the mobile terminal.

3. The payment method of claim 2, wherein the receiving of the location-based payment approval or rejection further comprises:
when the location-based payment rejection is automatically received by the mobile terminal because the estimated payment location and the location of the particular mobile terminal do not fall within the particular error range, requesting a payment approval from a user associated with the payment instrument.

4. The payment method of claim 3, wherein the particular error range includes a particular unit of an administrative district corresponding to the estimated payment location.

5. The payment method of claims 3, wherein the receiving of the location-based payment approval or payment rejection comprises: when the location-based payment approval is received from the particular mobile terminal, disregarding location-based payment approvals or payment rejections from the other remaining mobile terminals of the at least one mobile terminals.

6. The payment method of claim 1, wherein the payment instrument corresponds to a credit card, a check card, a cash withdrawal, the Internet, a telephone, or an IC chip.

7. The payment method of claim 1, wherein the payment location code corresponds to a network address, a phone number, or an affiliate code.

8. The payment method of claim 7, wherein the estimating of the payment location further comprises at least one of: converting a location of an Internet terminal associated with the network address, a location of a telephone associated with the phone number, and a location of an affiliate corresponding to the affiliate code into location information already used by the at least one mobile terminal.

9. The payment method of claim 8, wherein the already used location information includes at least one of: location data converted by a global positioning system (GPS), a WiFi-based positioning system (WPS), and a cellular-based positioning system (CPS).

10. A payment method performed by a mobile terminal connectable to a payment server, the payment method comprising:
receiving a payment location and a payment approval request from the payment server;
estimating a location of the mobile terminal; and
approving or rejecting the payment approval request based on location information regarding the payment location and the estimated location of the mobile terminal.

11. The payment method of claim 10, wherein the approving or rejecting of the payment approval request comprises automatically approving the payment approval request in the case that the payment location and the estimated location of the mobile terminal fall within a particular error range.

12. The payment method of claim 11, wherein the particular error range includes a particular unit of an administrative district corresponding to the payment location.

13. The payment method of claim 10, further comprising displaying the payment location and the estimated mobile terminal on a map.

14. The payment method of claim 13, wherein the approving or rejecting of the payment approval request further comprises prompting a payment approval request from the user on the displayed map.

15. The payment method of claim 10, wherein the approving or rejecting of the payment approval request further comprises prompting a payment approval request from the user, the payment approval request determined based on the payment location and the estimated location of the mobile terminal.

16. The payment method of claim 10, wherein the estimating of the location of the mobile terminal comprises location information based on at least one of: a global positioning system (GPS), a WiFi-based positioning system (WPS), and a cellular-based positioning system (CPS).

17. A payment server connectable to at least one mobile terminal and a payment terminal, the payment server comprising:
a payment information receiving unit configured to receive payment information including a payment identification code and a payment location code from the payment terminal;
a payment location estimating unit configured to estimate a payment location based on the payment location code;
a payment information transmitting unit configured to:
identify the at least one mobile terminal associated with the payment identification code; and
transmit the estimated payment location to the at least one mobile terminal; and
a payment permission receiving unit configured to receive a location-based payment approval or payment rejection from a particular mobile terminal of the at least one mobile terminal, the location-based payment approval or payment rejection determined based on the estimated payment location and a location of the particular mobile terminal.

18. The payment server of claim 17, wherein, when the estimated payment location and the location of the particular mobile terminal fall within a particular error range, the payment permission receiving unit receives the location-based payment approval automatically determined by one of: the mobile terminal and a user approval, and wherein, when the estimated payment location and the location of the particular mobile terminal do not fall within the particular error range, the payment permission receiving unit receives the location-based payment rejection automatically determined by the mobile terminal.

19. The payment server of claim 18, wherein when the location-based payment rejection is automatically received by the mobile terminal because the estimated payment location and the location of the particular mobile terminal do not fall within the particular error range, the payment permission receiving unit requests a payment approval from the user associated with the payment instrument.

20. The payment server of claim 19, wherein the particular error range includes a particular unit of an administrative district corresponding to the estimated payment location.

21. The payment server of claim 19, wherein, when the location-based payment approval is received from the particular mobile terminal, the payment permission receiving unit disregards location-based payment approvals or payment rejections by the other remaining mobile terminals of the at least one mobile terminals.

22. The payment server of claim 21, further comprising a payment notifying unit configured to notify one of the at least one mobile terminals about content of a determination, when the location-based payment approval or payment rejection is finally determined.

23. The payment server of claim 17, wherein the payment location code corresponds to at least one of: a network address, a phone number, and an affiliate code.

24. The payment server of claim 23, wherein the payment location estimating unit converts the following into location information already used by the at least one mobile terminal: a location of an Internet terminal associated with the network address, a location of a telephone associated with the phone number, and a location of an affiliate corresponding to the affiliate code into.

25. The payment server of claim 24, wherein the already used location information includes at least one of the following: location data converted by a global positioning system (GPS), a WiFi-based positioning system (WPS), and a cellular-based positioning system (CPS).

26. A mobile terminal connectable to a payment server, the mobile terminal comprising:
a payment approval request receiving unit configured to receive a payment location and a payment approval request from the payment server;
a location estimating unit configured to estimate a location of the mobile terminal; and
a payment approving unit configured to approve or reject the payment approval request based on location information regarding the payment location and the estimated location of the mobile terminal.

27. The mobile terminal of claim 26, wherein the payment approving unit automatically approves the payment approval request in the case that the payment location and the estimated location of the mobile terminal fall within a particular error range.

28. The mobile terminal of claim 27, wherein the particular error range includes a particular unit of an administrative district corresponding to the payment location.

29. The mobile terminal of claim 26, wherein the payment approving unit displays the payment location and the estimated location of the mobile terminal on a map.

30. The mobile terminal of claim 29, wherein the payment approving unit prompts a payment approval request from a user on the displayed map.

31. The mobile terminal of claim 26, wherein the payment approving unit prompts a payment approval request from the user, wherein the payment approval request is determined based on a distance between the payment location and the estimated location of the mobile terminal.

32. The mobile terminal of claim 26, wherein the location estimating unit determines a location of the mobile terminal based on at least one of: location information based on a global positioning system (GPS), location information based on a WiFi-based positioning system (WPS), and location information based on a cellular-based positioning system (CPS).
